# EUROPEAN PATENT SPECIFICATION

(11) **EP 1 745 966 B1**
(45) Date of publication and mention of the grant of the patent: **31.03.2010**
(21) Application number: 06380113.8
(22) Date of filing: 17.05.2006
(51) Int. Cl.: B60J 10/00, B60J 10/04

(54) **Seal for the corner of vehicle glass windows**
Dichtung für die Ecke von KFZ-Fenstern
Joint d'étanchéité pour les coins des vitres de véhicule

(30) Priority: 21.07.2005 ES 200501690 U
(43) Date of publication of application: 24.01.2007
(73) Proprietor: Seat, S.A., 08040 Barcelona (ES)
(72) Inventor: Colet Gali, Joan, c/o Seat, S.A., 08760 Martorell Barcelona (ES); Medina Ledantes, Angel, c/o Seat, S.A., 08760 Martorell Barcelona (ES); Fernandez Contreras, Oscar c/o Seat, S.A., 08760 Martorell Barcelona (ES)
(74) Representative: Carvajal y Urquijo, Isabel

(56) References cited:
- GB-A- 1 084 298
- GB-A- 2 393 751
- US-A- 5 839 232

## Description

### Field of the Invention

The present invention relates to a guide for the glass of openable vehicle windows, formed by two ribbed side profiles leading the vertical edges of the glass in its vertical movement and by an upper profile, also ribbed, receiving the upper edge of the glass when the latter reaches its upper maximum closing position. Such a guide is known from document GB-1 084 298.

### Backaround of the Invention

The profiles forming the guides for the glass are normally formed from a material with certain elastic deformation features, for example, from a rubber of ethylene-propylene-diene monomers or the like. These profiles have a ribbed structure, with a front wall which rests on the outer surface of the glass. In the angles defined between the upper profile and the side profiles, the front wall of every two concurrent profiles is normally bevel cut, with a slight separation closed or sealed with the same or similar material forming the profiles, which is injected in a mould. Since the front wall of the vertical and horizontal profiles has a different section, the closing or sealing by injection produces a small gap or recess in the angle, which forms a hollow with the surface of the glass when the latter is in the raised closing position, hollow which causes a small aerodynamic resistance during the running of the vehicle when it reaches a certain speed, the resistance entailing acoustic problems due to the noise produced.

### Description of the Invention

The object of the present invention is to eliminate the drawbacks set forth by eliminating the hollow traditionally produced in the angle defined between the horizontal and vertical profile, thus eliminating the risk of producing noises when the vehicle reaches a certain speed during its running.

To that end and according to the present invention, the front wall of one of the two profiles concurring in the meeting point between the upper profile and the side profiles has an extension from the transverse edge and in a position adjacent to the free longitudinal edge, this extension being tooth-shaped and reaching the opposite edge of the front wall of the other profile. This extension or tooth thus closes the mouth of the separation between the outer wall of the two profiles, which separation is closed or sealed by injection in the traditional way from the mentioned projection.

In this way, the injected material is not the one defining the edge in the angle defined between every two concurrent profiles in the front wall thereof, but rather it is the extension or tooth of the front wall of one of the profiles reaching the front wall of the other profile and which will rest on the surface of the glass, avoiding the production of hollows which could give rise to noises.

Said extention can have a sharp outline such that the vertex thereof is in contact with the edge of the opposite wall. The extension or tooth is preferably located in the front wall of the side profiles.

With the solution proposed, the front wall of the side profiles reaches the front wall of the upper profile, at least in the free edge, thus achieving the closing of the hollow produced by the orifice with the surface of the glass, which is the origin of the acoustic problems.

### Brief Description of the Drawings

The features of the invention can be better understood by the following description, made with reference to the attached drawings, in which a non-limiting embodiment is shown.

In the drawings:
Figure 1 shows a front elevational view of the union between one of the side profiles and the upper profile according to the traditional system.
Figure 2 shows a sectional view of the upper profile according to the II-II section line of Figure 1.
Figure 3 shows a cross-sectional view of the vertical profile according to the III-III section line of Figure 1.
Figure 4 shows a perspective view of detail A of Figure 1.
Figure 5 shows a view similar to that of Figure 1 of a guide formed according to the invention.
Figure 6 shows a perspective view of detail B of Figure 5.

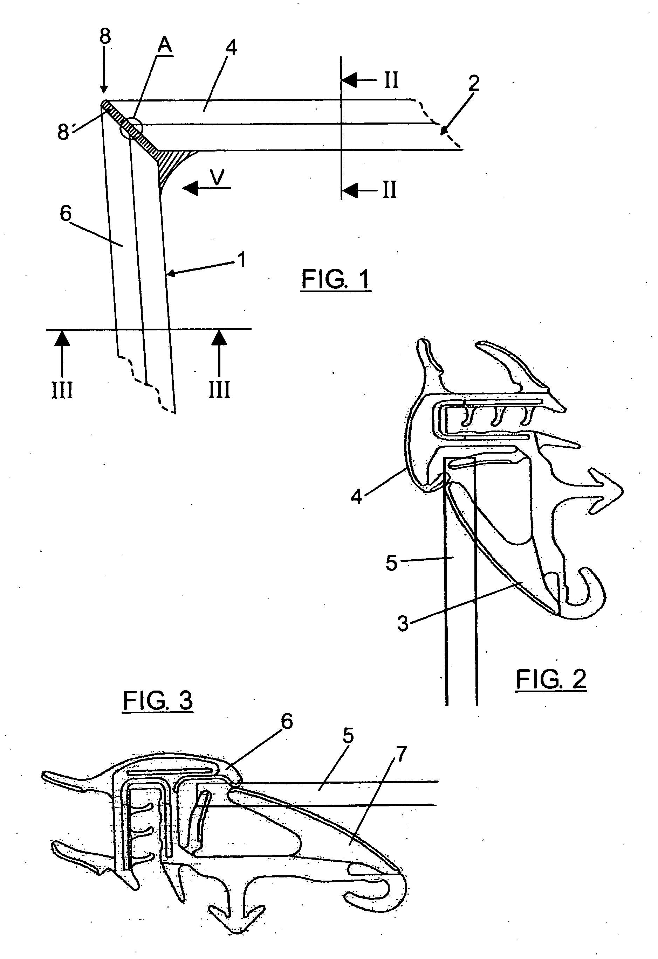

Figure 1 shows a traditionally formed guide, made up of two side profiles, one of which is shown with reference number 1, and by an upper profile with reference number 2.

As can be observed in Figure 2, the upper profile 2 has a ribbed configuration limited by a back wall 3 and a front wall 4, between which the upper edge of the glass 5 will be introduced when it reaches its upper maximum closing position.

In turn and as can be seen in Figure 3, the side profiles 1 also have a ribbed configuration defined by a front wall 6 and a back wall 7 between which the vertical edge of the glass 5 enters and slides.

In each of the corners 8 or meeting points between the side profiles 1 and the upper profile 2, these profiles are bevel cut, the oblique edges of the front walls 4 and 6 being slightly separated and delimiting a space which is closed by means of a moulding 8', formed from a material which coincides or is similar to that forming the guides, by injecting in a mould.

Since the free longitudinal edge of the front walls 4 and 6 of the horizontal profile 2 and the side profiles 1 have a different configuration and thickness, moulding 8' forms a gap 9, in coincidence with the angle, which produces a hollow 10 on the surface of the glass 5 which gives rise to undesirable noises during the running of the vehicle when it reaches a certain speed.

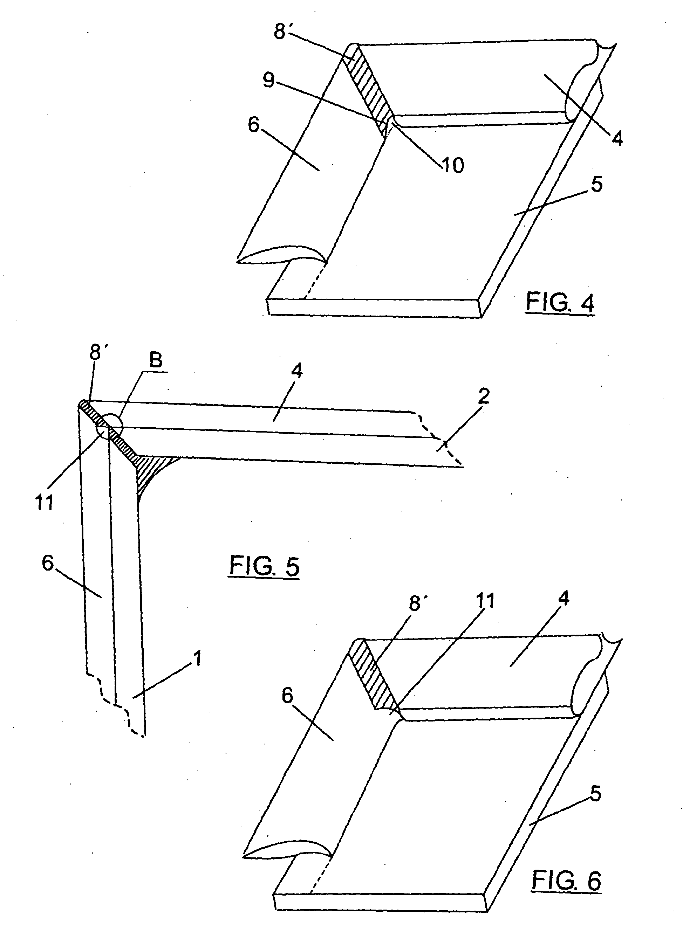

In order to eliminate the drawbacks set forth, according to the invention, one of the profiles concurring in each meeting point, preferably the side profiles 1, are provided on the front wall 6, from the oblique edge, with an extension 11 which, as can be best observed in Figure 6, is adjacent to the free longitudinal edge and reaches the opposite edge of the front wall 4 of profile 2. This extension 11 closes the mouth of the separation between walls 4 and 6 of the two profiles, which separation is subsequently closed or sealed by means of moulding 8', in the traditional way.

With this constitution, the moulding 8' is limited by the extension 11, which closes the separation between walls 4 and 6 and which will form an element which will rest on the outer surface of glass 5, without the existence of hollows that may produce undesirable noises.

The extension 11 has a sharp tooth shape, the vertex of which can reach the opposite edge of the front wall 4 of the upper profile or be slightly separated therefrom.

With the described constitution, by means of the extension of the front wall 6 of the side profiles, the origin of the acoustic problems produced in traditional guides is eliminated because in the angles or meeting points between the side profiles and the upper profile, the angle is closed by the wall 6 of the side profiles themselves which will rest on the surface of the glass 5 when the latter is in the raised closing position.

## Claims

1. A guide for the glass (5) of openable vehicle windows formed by two ribbed side profiles leading the vertical edges of the glass and by an upper profile (2), also ribbed (3,4), receiving the upper edge of the glass, the profiles of which have a front wall (4,6) resting on the outer surface of the glass (5), the separation between the front wall (4) of the upper profile (2), and the front wall (6) of the vertical profiles (1), being closed in the angles of the meeting points between profiles by means of injection moulding (8') with the same material as the profiles, **characterized in that** the front wall (6) of one of the profiles (1) concurring in the meeting point between the upper profile (2) and each of the side profiles has a tooth-shaped extension (11) from the transverse edge and in a position adjacent to the free longitudinal edge, reaching the opposite edge of the front wall (4) of the other profile (2) and closing the mouth of the separation between the front walls of the two profiles (1,2), the separation of which is sealed, from said tooth-shaped extension (11), by means of injecting the same material as that of the profiles.

2. A guide according to claim 1, **characterized in that** said tooth-shaped extension (11) starts from the front wall of the side profiles.

3. A guide according to claims 1 and 2, **characterized in that** said tooth-shaped extension (11) has a sharp outline and the vertex thereof is in contact with the opposite edge of the front wall of the horizontal profile.

## Patentansprüche

1. Führung für das Glas (5) zu öffnender Fahrzeugfenster, die von zwei gerippten Seitenprofilen gebildet wird, welche die vertikalen Kanten des Glases führen, und von einem oberen Profil (2), das ebenfalls gerippt (3, 4) ist und die obere Kante des Glases aufnimmt, wobei die Profile der Führung eine vordere Wandung (4, 6) aufweisen, die an der Außenfläche des Glases (5) ruht, wobei die Lücke zwischen der vorderen Wandung (4) des oberen Profils (2) und der vorderen Wandung (6) des vertikalen Profils (1) in den Winkeln der Punkte des Zusammentreffens der Profile mit Hilfe von Spritzgießen des gleichen Materials, wie es die Profile aufweisen, geschlossen ist, **dadurch gekennzeichnet, dass** die vordere Wandung (6) eines der Profile (1), die am Punkt des Zusammentreffens des oberen Profils (2) und jedes der Seitenprofile zusammentreffen, eine zahnförmige Ausweitung (11) von der quer verlaufenden Kante aufweist, die in einer an die freie Längskante angrenzenden Position die gegenüberliegende Kante der vorderen Wandung (4) des anderen Profils (2) erreicht und den Mund der Lücke zwischen den vorderen Wandungen der zwei Profile (1, 2) schließt, wobei deren Lücke ab der zahnförmigen Ausweitung (11) abgedichtet wird, indem das gleiche Material, wie es die Profile aufweisen, eingespritzt wird.

2. Führung nach Anspruch 1, **dadurch gekennzeichnet, dass** die zahnförmige Ausweitung (11) an der vorderen Wandung des Seitenprofils beginnt.

3. Führung nach Anspruch 1 oder 2, **dadurch gekennzeichnet, dass** die zahnförmige Ausweitung (11) eine klare Kontur aufweist und ihr Eckpunkt die gegenüberliegende Kante der vorderen Wandung des horizontalen Profils berührt.

## Revendications

1. Guidage pour la vitre (5) de fenêtres de véhicule ouvrables formées par deux profilés latéraux nervurés suivant les bords verticaux de la vitre et par un profilé supérieur (2), également nervuré (3, 4), recevant le bord supérieur de la vitre, les profilés possédant une paroi avant (9, 6) reposant sur la surface supérieure de la vitre (5), la séparation entre la paroi avant (9) du profilé supérieur (2) et la paroi avant (6) des profilés verticaux (1) étant fermée dans les angles des points de rencontre entre profilés au moyen de moulage par injection (8') avec le même matériau que les profilés, **caractérisé en ce que** la paroi avant (6) d'un des profilés (1) se trouvant dans le point de rencontre entre le profilé supérieur (2) et chacun des profilés latéraux possède un prolongement en forme de dent (11) à partir du bord transversal et dans une positon adjacente au bord longitudinal libre, atteignant le bord opposé de la paroi avant (4) de l'autre profilé (2) et fermant l'embouchure de la séparation entre les parois avant des deux profilés (1, 2), dont la séparation est scellée, à partir dudit prolongement en forme de dent (11), en injectant le même matériau que celui des profilés.

2. Guidage selon la revendication 1, **caractérisé en ce que** ledit prolongement en forme de dent (11) commence à partir de la paroi avant des profilés latéraux.

3. Guidage selon les revendications 1 et 2, **caractérisé en ce que** ledit prolongement en forme de dent (11) possède un contour vif et le somment de celui-ci est en contact avec le bord opposé de la paroi avant du profilé horizontal.
